Europäisches Patentamt

European Patent Office

Office européen des brevets

(19)

(11) Publication number: **0 053 129**
**B1**

(12) **EUROPEAN PATENT SPECIFICATION**

(45) Date of publication of patent specification: **06.08.86**

(51) Int. Cl.⁴: **A 01 D 50/00**

(21) Application number: **81901431.7**

(22) Date of filing: **27.04.81**

(86) International application number:
**PCT/US81/00546**

(87) International publication number:
**WO 81/03106 12.11.81 Gazette 81/27**

(54) **APPARATUS FOR CUTTING VEGETATION.**

(30) Priority: **28.04.80 US 144062**

(43) Date of publication of application:
**09.06.82 Bulletin 82/23**

(45) Publication of the grant of the patent:
**06.08.86 Bulletin 86/32**

(84) Designated Contracting States:
**AT CH DE FR GB LI LU NL SE**

(56) References cited:
**FR-A-2 429 550**
**US-A-4 104 796**
**US-A-4 151 646**
**US-A-4 236 312**
**US-A-4 244 103**
**US-A-4 290 200**

(73) Proprietor: **EMERSON ELECTRIC CO.**
**8100 W. Florissant Avenue**
**St. Louis Missouri 63136 (US)**

(72) Inventor: **MITCHELL, Albert W.**
**11523 Willwood**
**Houston, TX 77072 (US)**

(74) Representative: **Brereton, Paul Arthur et al**
**REDDIE & GROSE 16 Theobalds Road**
**London WC1X 8PL (GB)**

Courier Press, Leamington Spa, England.

## Description

### Background of the Invention

This invention relates to the cutting of vegetation, and more particularly, it relates to the cutting of vegetation using a flexible, non-metallic cutting line extending from a rotating head into a cutting plane.

Various types of devices have been proposed for many years to facilitate the removal of vegetation by mowing, trimming, edging and like cutting operations. In general, these devices have employed a metal blade to effect vegetation removal. Devices of this nature employ prime movers such as electric and gasoline motors. As a result, rotating metal blades can inflict serious and terrible injury upon the user.

In the United States of America, practical vegetation cutting devices using flexible, non-metallic lines carried upon a rotating head were developed. Examples of devices are shown in U.S. Patents 3,708,967, 3,826,068, 4,052,789, 4,054,992, 4,067,108 and 4,104,797. These patented devices have met outstanding success in that these American developments provide safer electrical or gasoline-powered tools for vegetation cutting, edging and trimming operations.

The devices shown in these patents employ a flexible cutting line, such as manufactured from Nylon® polymer. The cutting line is carried usually upon a spool internally of a rotating head. When desired to replenish the line or to extend an additional length of it, the rotation of the head was stopped and line manually extended from the spool. This line extension procedure in the patented devices has been found to be convenient, simple and reliable. In many of the more powerful devices, especially those powered by DC electric motors, a system to extend the cutting line from the head without interrupting cutting operations was desired.

A most desirable system would be capable of feeding cutting line as needed from the head so that line feeding is independent of operator action during grass cutting. Structures directed toward this purpose are shown in US—A—3,895,440, 4,020,550 and 4,035,915. These structures have in common a basket-weave supply of cutting line carried on the periphery of a disc with the line feeding from behind special post members. These post members have a cutting-abrading edge so that cutting line from the weave supply is bent about such edge in the free traveling end portion extending into the cutting plane. The combination function of the edge, line, angular speed, etc., is arranged so that the line posts with such edge sever the free end of the cutting line when it is worn to an ineffective length. In practice, these structures are found to waste about 25 per cent of the cutting line because of the excessive length of line severed at the post's edge, e.g., three inches.

Other line feeding structures are shown in US—A—4,118,864 and 4,138,810. These mechanisms control spool rotation in line feeding functions by worm and spur gears having complex action in the vegetation cutting environment.

FR—A—2429550 discloses apparatus for cutting vegetation in which escapement mechanisms control the rotation of the spools on which the cutting line is stored. The escapement mechanisms move in response to changes in the speed of rotation of the cutting head to allow the spools to rotate relative to the head so that incremental lengths of cutting line are fed into the cutting plane.

The present invention provides a rotating head with a simple mechanism that maintains the cutting line at its maximum length in the cutting plane irrespective of rates of cutting line wear or loss and without interrupting vegetation cutting or requiring independent operator action. However, the operator can selectively activate the mechanism if additional length of cutting line extensions are desired.

In accordance with the present invention there is provided an apparatus for cutting vegetation comprising a head rotatable about an axis of rotation, said head having at least one peripheral aperture and a cavity providing a storage area for a supply of coiled cutting line disposed on a rotatable spool in said cavity, said cutting line being flexible and non-metallic with a free end extending outwardly from said head through said aperture into a cutting plane, and an escapement member including means cooperable with said spool to provide locking engagement of said spool with said escapement member in a first position of said escapement member for securing said cutting line from extension through said aperture into the cutting plane when said free end has a predetermined length, said escapement member being mounted on said head for movement between said first position and a second position for extending step-by-step said cutting line through said aperture into the cutting plane, said escapement member being movable from said first position to said second position during head rotation whenever said cutting line is shortened to less than the predetermined maximum length, whereby said cutting line is extended in length during the cutting of vegetation, and means being provided tending to return the escapement member from the first position to the second position, and said escapement member being characterized in that said escapement member includes a portion engaged with said cutting line along part of said cutting line between said spool and the free end of said cutting line for urging said escapement member toward said first position due to a force exerted on said escapement member caused by said cutting line tending to extend through said aperture into the cutting plane during the cutting of vegetation, and further characterised by the means tending to return the escapement member comprising a counterbalance mass on said escapement member for effecting movement of said escapement member in response to a decrease in centrifugal force on said cutting line for shifting said escapement member to said second position.

Application 85106955.9 published as EP—A—171533 on 19.02.86 claims subject-matter which is also disclosed herein.

Embodiments of the invention will now be described by way of example with reference to the accompanying drawings of which:—

Fig. 1 is a pictorial view illustrating one embodiment of the apparatus for cutting vegetation arranged according to the present invention;

Fig. 2 illustrates in enlargement the lower portion of the apparatus shown in Fig. 1;

Fig. 3 is a vertical-section, in enlargement, taken axially through the cutting head of the apparatus shown in Fig. 2;

Fig. 4 is a cross-section of the cutting head as shown in Fig. 3, taken along line 4—4;

Fig. 5 is a top plan view of the escapement cam of the cutting head shown in Fig. 3;

Fig. 6 is a cross-section taken on line 6—6 in Fig. 3 illustrating the escapement cam in a first position to prevent rotation of the spool carrying cutting line within the cutting head;

Fig. 7 is a cross-section like Fig. 6 but with the escapement cam in the second position to allow spool rotation to extend cutting line from the cutting head; and

Fig. 8 is a cross-section of the spool used in the cutting head.

In these drawings, the several embodiments have common elements of construction in the cutting head. In regard to the several figures, like elements carry like numerals to simplify description of these embodiments in description of the present apparatus.

Description of Preferred Embodiments

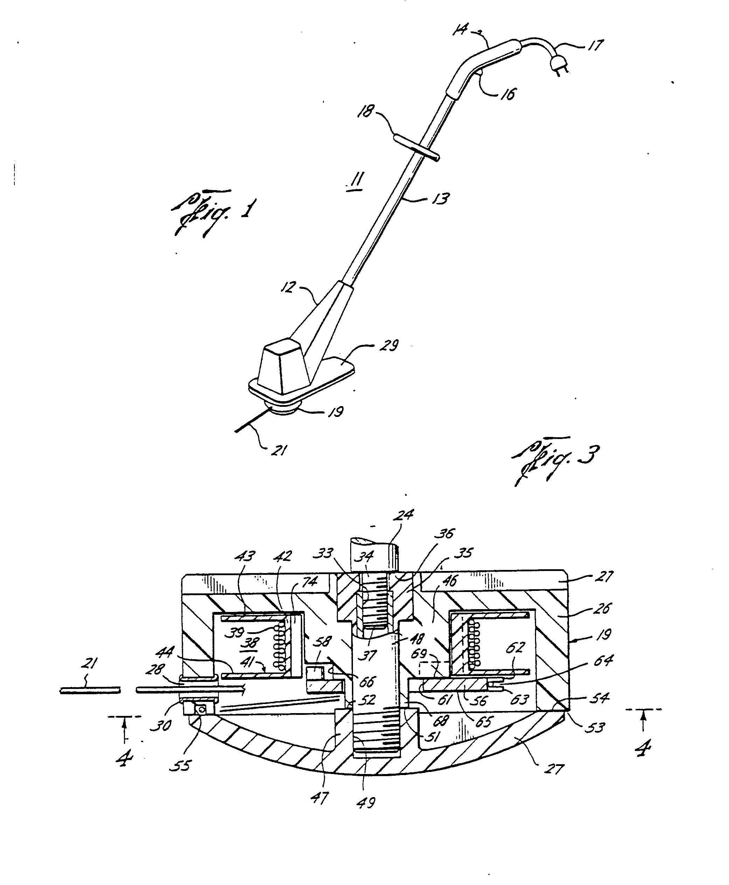

Referring to Fig. 1, there is shown an apparatus for cutting vegetation which is constructed in accordance with one embodiment of the present invention. In this particular embodiment, the apparatus is a grass trimmer 11, but it could be a lawn mower, edger or other device for vegetation cutting purposes. The trimmer 11 has a lower housing 12 interconnected by a tube 13 to a handle assembly 14. The assembly 14 provides a switch 16 for selectively applying electrical power received by a cord 17 to an electrical motor carried within the housing 12. For two-handed operation of the trimmer 11, an auxiliary handle 18 is provided upon the tube 13. The lower housing 12 carries a head 19 rotatable about an axis passing through the housing 12, and the cutting line 21 extends into a cutting plane which is substantially perpendicular to the axis of rotation of the head.

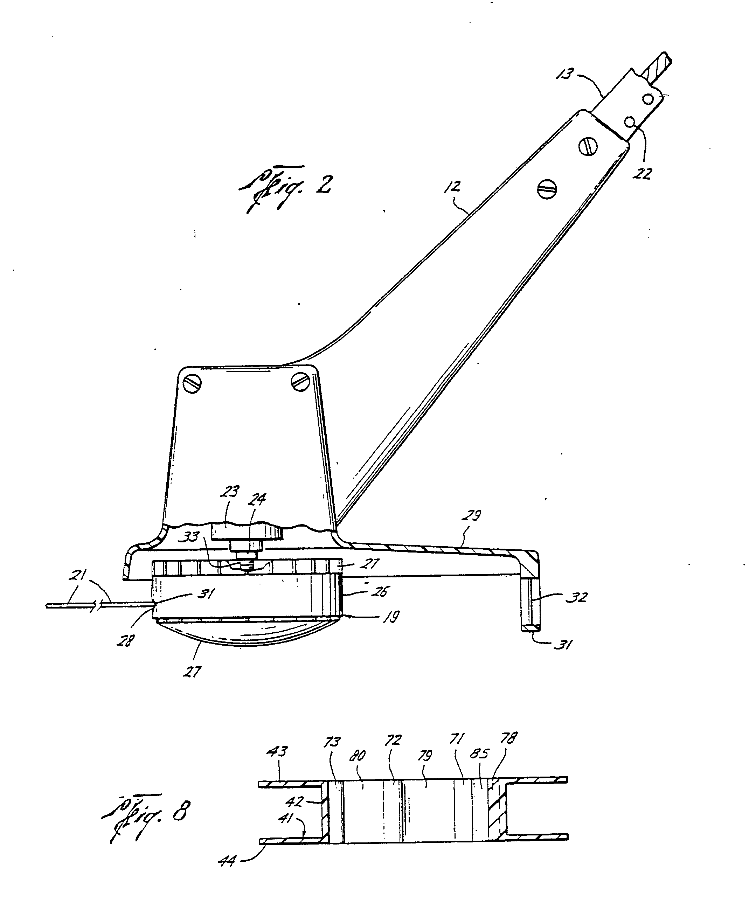

In Fig. 2 there is shown an enlargement of the housing 12 carrying a plurality of air induction openings 22 in the tube 13. These openings introduce a flow of cooling air over the motor contained in the housing 12. The housing 12 includes an electric motor 23 which has a downwardly-extending drive shaft 24. The head 19 is threadedly connected to the shaft 24. The upper surface of the head 19 may be surrounded by a plurality of vanes 27 serving as a centrifugal blower for moving air radially outwardly from the head 19 during its rotation. As a result, the induced flow of air cools the motor 23 within the housing 12. The head 19 includes a hub 26 and a cover 27. The hub 26 carries in its side peripheral surface an aperture 28 through which the cutting line 21 extends radially outwardly into the cutting plane. A metal bearing surface 30 may be placed at the aperture to protect the line 21 against undue wear and breakages. The cover 27 is releasably secured to the hub 26 by a threaded connection.

The housing 12 includes a rearwardly-extending tail part 29 which serves as a protection to the user to prevent inadvertent contact with the rotating cutting line 21. Also, the tail part provides an automatic limit to any excessive extension of the cutting line 21 from the head 19. More particularly, the tail part 29 has a downwardly-extending projection 31 in which is embedded a metal cutting blade 32. As a result, the cutting line 21, when rotated in a cutting plane by the head 19, can never have an operating length greater than the distance from the axis of rotation to the cutting blade 32. Any greater length of cutting line is automatically severed by the blade 32.

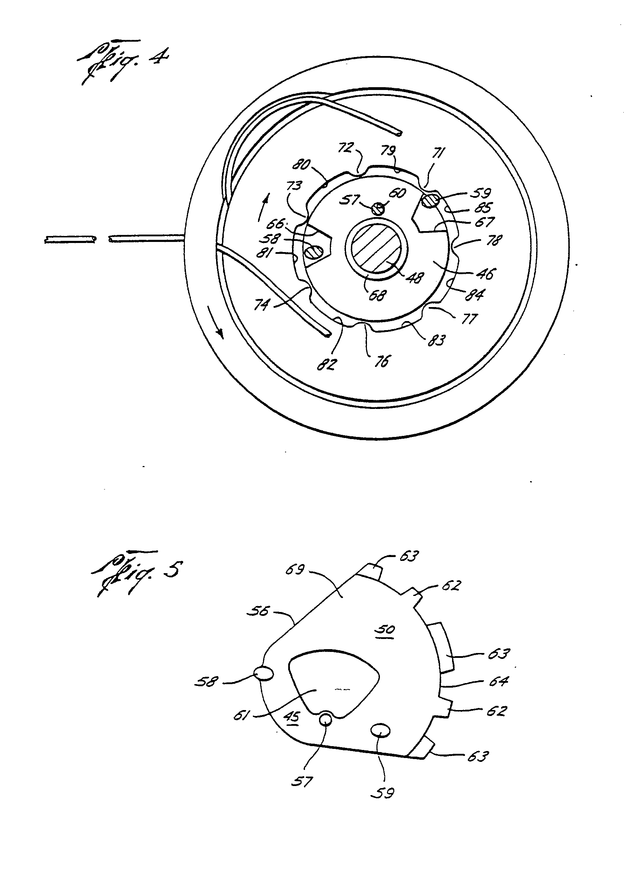

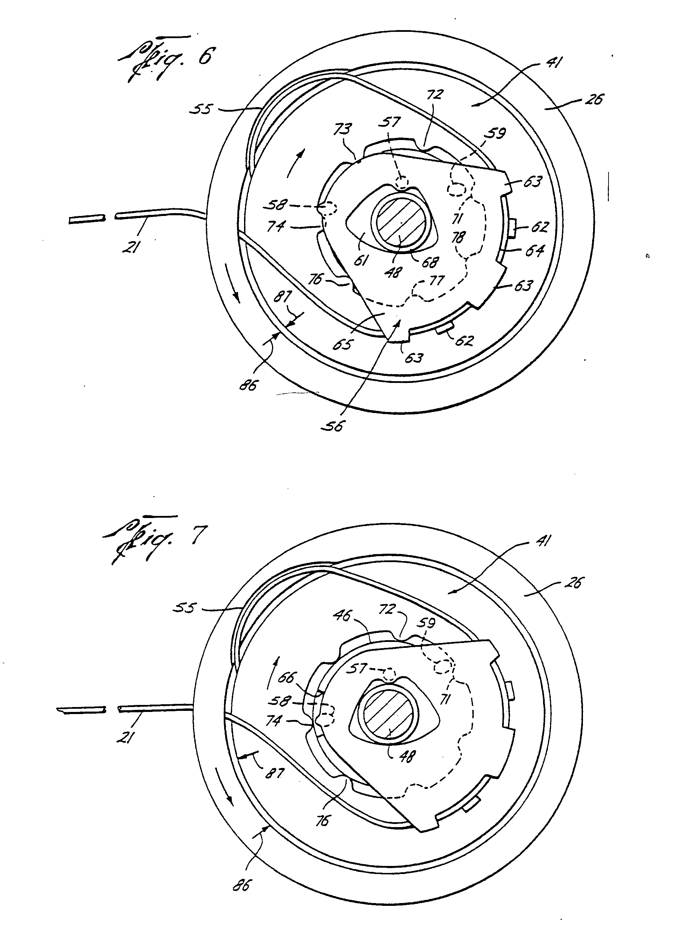

The head 19, as seen in Figs. 3—7, is disc-like with a smooth peripheral side surface carrying the aperture 28 through which the cutting line 21 extends into the cutting plane. If more than one cutting line is used, each line should have a separate aperture and bearing surface. The hub 26 one face carries an adapter 35 with an integral metal sleeve having interior threads 33 in which the drive shaft 24 is secured by its threads 34. In addition, the adapter threads 33 extends axially a sufficient dimension in the head 19 to form a rigid and integral connection with the shaft 24. Preferably, the shaft 24 is cylindrical with a flat circular shoulder 36 above its lower terminus 37.

The exposed external surfaces of the head 19 should be smooth in surface contour, rounded at the edges and without substantial projections and recesses capable of trapping appreciable vegetation. Preferably, the cover 27 has a smooth exposed surface, is circular in configuration with rounded corners, and is coaxially aligned with the axis of rotation of the head 19.

The hub 26 forms a cylindrical cavity 38 in cooperation with the cover 27. A supply 39 of coiled cutting line is disposed within the cavity 38. The coiled cutting line is free for uncoiling by independent rotational and axial movements within the head 19. Preferably, the coiled cutting line is carried on a spool 41 mounted for rotation within the head.

The spool has a tubular body 42 with flanges 43 and 44 defining a space receiving the supply 39 of cutting line. The spool 41 is journaled for free rotation in the head 19 by its mounting upon a cylindrical post 46 and axially secured by a post 47 carried upon the hub 26 and cover 27, respectively.

The cover 27 carries internal threads 49 which receive the threaded stud 48 formed on the lower part of the adapter 35 in the hub 26. The hub and cover have meeting surfaces 51 and 52 provided by a reduced collar 68 on post 46 and the post 47, and peripheral abutting planar surfaces 53 and 54. The cover is unthreaded for access to the cavity 38, preferably counter-directionally to head rotation to prevent unintended loosening. A series of peripheral ridges permit ready gripping of the cover for its threaded mounting on the hub.

The interior end of the coiled cutting line is secured to the spool 41. The cutting line passes from the spool 41 in a helical path through an arcuate cut 55 in the hub 26, along the line control mechanism including an escapement cam 56 and then through the aperture 28. The free end of the cutting line 21 extends outwardly of the head 19 from the aperture 28. Preferably, the coiled cutting line supply 39 is wound codirectionally to the rotation of the head during vegetation cutting. This line winding arrangement avoids backlash problems and unintended uncoiling of cutting line when rotation of the head is suddenly induced.

In accordance with this invention, a fully automatic mechanism is provided to uncoil the cutting line within the head, and to extend the cutting line through the aperture into the cutting plane when the cutting line is shortened to less than the predetermined length.

More particularly, the mechanism provides for the positive segmental line advance by a controlled rotation of the spool 41 relative to the head 19 during vegetation cutting. An important feature of the mechanism is an escapement cam that provides a step-by-step rotation of the spool by sensing centrifugal force induced on the cutting line by head rotation and the force acting on the escapement cam resulting from changes in rotary speed at the head. Also, the escapement cam uses these forces in coaction to provide a snap-action line advancement function by mounting the escapement cam upon an off center pivot.

In reference to Fig. 3—7, an escapement cam mechanism is illustrated which provides the automatic but positive incremental extension, as needed, of the cutting line. The head 19 carries the escapement cam 56 in an off center pivot mounting which provides for swinging movement between a first position (shown in Fig. 6) and a second position (shown in Fig. 7).

The escapement cam 56 has a wedge-shape with an apex 45 at its small end and an enlarged portion 50 at its other end. The term wedge-shape is intended to include not only narrow angled members, but, also cams with included angles of 90 degrees or greater. Also, the enlarged portion preferably has a peripheral arcuate edge and good results are obtained with this edge being of a curve at the radius equal to the distance from the head's axis of rotation to the edge. However, the peripheral edge can have other configurations as will be apparent from the accompanying description.

The cam 56 has a central opening 61 which mounts about the neck 68 of the post 46. As a result, the cam mounts centrally within the head and swings between first and second positions upon an off center pivot relative to the post 46. More particularly, the cam 56 carries a pivot projection 57 adjacent its apex and the projection 57 is received loosely within a hole 60 in the post 46. Since the hole 60 is spaced from the axis head rotation, the cam 56 swings eccentrically between its first and second positions.

The cam 56 also carries projecting anchor pins 58 and 59 that are spaced to each side of the pivot projection 57. These anchor pins move radially inwardly and outwardly relative to recesses 66 and 67 formed into the end surfaces of the post 46.

Preferably, the cam 56 is planar and may be constructed of a rigid material of suitable strength, such as aluminum. The anchor pins can be cast or machined into the planar body of the cam and project normally from its top surface 69. Good results are provided where the anchor pins are round but preferably, the anchor pins are oval in cross-section for smooth operation.

The enlarged portion of the cam 56 has a peripheral edge with a longitudinal groove 64 to receive the cutting line 21 in that portion extending between the spool 41 and the aperture 28. The groove 64 may have unbroken edges, but preferably, as for weight savings, the groove 64 is provided by laterally offset projections 62 and 63 to contain the cutting line. The force arising from the cutting line extending from the rotating head 19 is applied through groove 64 (as on a pulley) to move the cam 56 sideways between the first and second positions.

The enlarged portion 50 of the cam 56 also provides adjacent the groove 64 of a counterbalance mass that provides a unique function in the present head. The mass of the cam 56 at its enlarged end 50 (without the cutting line acting upon it) is arranged to function with the off center pivot mounting on projection 57 so that at normal operating rotary speeds, the cam 56 is moved into the second position, wherein the cutting line is extended stepwise in a length from the rotating head 19.

The action of the cutting line in the groove 64 is to swing the cam 56 responsive to the centrifugal force acting upon the free end of the cutting line within the cutting plane.

When the cutting line 21 is at its predetermined maximum extended length into the cutting plane, the cam 56 is swung into its first position (Fig. 6) wherein the cutting line is secured against extension or feeding additional line from the head.

When the cutting line 21 is shortened to less than the desired predetermined maximum extended length, the effective centrifugal force of the cutting line is lessened, and the cam 56 swings into its second position (Fig. 7) and a length of cutting line is extended stepwise from the rotating head 19.

The cam 56 moves with a snap-action between the first and second positions, because of the off center pivotal mounting of the cam 56 relative to the rotational axis of the head 19, the counterbalance mass, and the action of the cutting line on the cam. This positive movement between positions insures a proper and positive feeding of cutting line from the head. At no time, can the cam oscillate or hunt between the first and second positions.

Any mechanism can connect the cam 56 with the spool 41 for controlling its rotation relative to the head 19 in a stepwise fashion. Preferably, a tooth and anchor pin arrangement is used. For this purpose, the spool 41 carries a plurality of radially inward facing teeth 71—74 and 76—78. These teeth at their inner ends provide bearing surfaces about the post 46 for coaxial rotation of the spool 41 relative to the hub 26. Preferably, the teeth are axially elongated and extend the length of the tubular body 42 of the spool 41.

The teeth 71—74 and 76—78 are separated by grooves 79—85. These grooves are of sufficient depth to provide clearance to the anchor pins when in their radial outward positions. As a result, the spool rotates freely until a tooth encounters an anchor pin in its position outward from the recesses on the post 46.

The teeth are dimensional to be engaged by the anchor pins 57 and 58 when either pin is in its outward position. Of course, these teeth are disengaged by either pin when in its inward position and received within recesses 66 and 67 on the post 46. One anchor pin engages a tooth while the other pin is in the recess on the post 46.

The teeth and anchor pins are angularly positioned to cooperate as an escapement to control rotation of the spool 41 as the cam 56 is swung sideways between the first and second positions. Referring to Fig. 6, the cam 56 is in the first position, and the anchor pin 58 engages the tooth 74 to secure the spool 41 against rotation to feed the cutting line from the head 19. At this time, the anchor pin 59 is in the recess 67.

When the cutting line 21 is shortened to less than the predetermined maximum extended length in the cutting path, the cam 56 swings into the second position as seen in Fig. 7. The anchor pin 58 has moved into the recess 66 and the spool 41 is rotated angularly until the tooth 72 in its outward position engages the anchor pin 59.

The spool rotates stepwise until the outward anchor pin stops the next approaching tooth. If the cutting line 21 has now been extended to the desired extension into the cutting plane, the cam 56 now is swung into the first position. If the cutting line is yet not fully extended, from the head 19, the cam 56 swings toward the second position sufficiently to clear the anchor pin 58 from the adjacent tooth and returns momentarily into the first position, and the cam 56 again swings between first and second positions for feeding stepwise additional lengths of cutting line from the rotating head. At this time the spool has rotated angularly a certain displacement shown by the index arrows 86 and 87. This successive feeding function of the cam 56 is the product of the off center pivoted mountings in coordination with the selected counterbalance mass, and the swinging action of the cam from the centrifugal force applied to it by the extended cutting line.

The cam 56 with the counterbalance mass also has a unique function in that not only is automatic line feeding obtained without operator intervention, but additional line feed (if needed) is induced by a start-stop operation of the trimmer 11, or other certain changes in rotary speed of the head 19.

As the head 19 accelerates, the counterbalance mass reacts to swing the cam 56 into the second position, but when the cutting line is fully extended, the spool is not released for rotation because of the action of the cutting line on the cam. As the head 19 decelerates, the cam 56 is held in the first position so no feeding of the cutting line can occur. Thus, line feeding can be induced at shortened cutting line lengths by a start-stop operation of the trimmer of the head 19 while cutting vegetation. However, the counterbalance mass at the enlarged end of the cam 56 must not be too great relative to action of the cutting line on the cam because the cam would shift into the second position and feed cutting line each time the head 19 accelerates in rotary speed.

The eccentric swinging of the cam 56 provides for the anchor pins to be jammed against the teeth they engage upon the spool. The anchor pins move radially outwardly and an arc intersecting the circle defining the teeth on the spool. As a result, the spool must move slightly counterdirectionally to the direction for unwinding cutting line to release the cam for movement between the first and second positions. This unique function of the offcenter pivoted cam prevents over-feeding or ratcheting (machine-gunning) of the cam relative to the spool.

The feeding of the cutting line appears to involve some sliding of its portion contained in the groove 64. Assuming that the centrifugal force acting on the free end of the cutting line holds taut that portion of the cutting line between the groove 64 and aperture 28, then the cam 56 swinging into the second position (Fig. 7) requires the cutting line to slide in the groove 64. Stated in a different matter, the cam 56 in swinging into the second position must let the cutting line slide in the groove 64. Otherwise, the cutting line would be pulled inwardly into the head at its free end within the cutting path.

The teeth 71—74 and 76—78 are separated by grooves 79—85. These grooves are of sufficient depth to provide clearance to the anchor pins when in their radial outward positions. As a result, the spool rotates freely until a tooth encounters an anchor pin in its position outward from the recesses on the post 46.

Although the head 19 can be manufactured in various forms and of several materials, it is preferred to manufacture the hub 26 and cover 27 of plastic material, e.g., Nylon 6 polymer. The spool 41 and cutting line can be made of a similar material. The cam 56 can be made of a durable strong material, such as steel, aluminum or various metallic combinations.

Although there has been described a particular arrangement of functions and elements in the various mechanisms employed in the head of the present invention, it is not intended that this description be the only possible arrangement of these elements to produce the results of the invention. In this regard, the functions and elements may be altered to produce the same results. All that is required for these elements is a mechanism which secures the line 21 from extension when at the predetermined maximum extended length in the cutting plane. Also, the mechanism must release the cutting line "as needed" when the cutting line has been reduced by wear or loss, to length less than the desired maximum length. In addition, the mechanism provides for the automatic extension of the cutting line with a few relatively simple and inexpensive escapement elements.

From the foregoing, it will be apparent that there has been provided a novel apparatus for cutting vegetation which provides a novel apparatus for cutting vegetation which provides a convenient and safe means for extending automatically cutting line without the individual attention of the operator. It will be appreciated that certain changes or alterations in the present apparatus may be made without departing from the spirit of this invention. These changes are contemplated by and are within the scope of the appended claims which define the invention. Additionally, the present description is intended to be taken as an illustration of this invention.

## Claims

1. An apparatus (11) for cutting vegetation comprising:

a head (19) rotatable about an axis of rotation, said head having at least one peripheral aperture (28) and a cavity (38) providing a storage area for a supply (39) of coiled cutting line (21) disposed on a rotatable spool (41) in said cavity, said cutting line being flexible and non-metallic with a free end extending outwardly from said head through said aperture into a cutting plane, and

an escapement member (56) including means (58, 59) cooperable with said spool to provide locking engagement of said spool with said escapement member in a first position of said escapement member for securing said cutting line from extension through said aperture into the cutting plane when said free end has a predetermined length, said escapement member being mounted on said head for movement between said first position and a second position for extending step-by-step said cutting line through said aperture into the cutting plane, said escapement member being movable from said first position to said second position during head rotation whenever said cutting line is shortened to less than the predetermined maximum length, whereby said cutting line is extended in length during the cutting of vegetation, and means being provided tending to return the escapement member (56) from the first position to the second position, and said escapement member being characterized in that said escapement member (56) includes a portion (64) engaged with said cutting line (21) along part of said cutting line between said spool and the free end of said cutting line for urging said escapement member toward said first position due to a force exerted on said escapement member caused by said cutting line tending to extend through said aperture into the cutting plane during the cutting of vegetation, and further characterised by the means tending to return the escapement member comprising a counterbalance mass on said escapement member for effecting movement of said escapement member in response to a decrease in centrifugal force on said cutting line for shifting said escapement member to said second position.

2. The apparatus of Claim 1, wherein said escapement member has a wedge-shape with pivot means (57) at its apex (45) and an arcuate groove (64) at its enlarged portion (50) to engage a part of said cutting line extending from said spool to said aperture (28) for sensing variations in centrifugal force exerted upon said free end of said cutting line (21) reflecting the angular velocity of said head (19) during rotation.

3. The apparatus of Claim 2, wherein said cutting line (21) acts on said escapement member (56) to shift angularly said escapement member into the second position when said cutting line is shortened to less than the predetermined length.

4. The apparatus of Claim 1, wherein said escapement member (56) acts with a snap-action during acceleration of said head (19) to shift positively said escapement member into said second position.

5. The apparatus of Claim 4, wherein said escapement member (56) acts with a snap-action during deceleration of said head (19) to shift positively said escapement member into the first position when said cutting line (21) is extended to the predetermined maximum length.

6. The apparatus of Claim 1, wherein said escapement member (56) is mounted on pivot means (58) on said head member (19) for movement about an axis which is off center with respect to the axis of rotation of said head (19) whereby said escapement member moves angularly from said first position to said second position when said head is accelerated in rotation between a condition of non-rotation and operation in cutting vegetation.

7. The apparatus of Claim 6, wherein said escapement member (56) includes opposed anchor pins (58, 59) disposed on each side of said pivot means (58), and the movement of said escapement member between said first and second positions moves said anchor pins radially between inward and outward positions, and said spool (41) carries a plurality of angularly disposed escapement teeth (71—74, 76—78), said teeth being operable to be selectively engaged by said anchor pins for securing said spool against rotation with said escapement member in the first position and controlling rotation of said spool means by step-by-step engagement of said teeth by said anchor pins when said escapement member moves between said first position and said second position.

8. The apparatus of Claim 7, wherein said escapement teeth (71—74, 76—78) are disposed on said spool at equally spaced radial positions with one tooth disengaged by one of said anchor pins at its inward position and another of said teeth engaged by the other of said anchor pins at its outward position.

9. The apparatus of Claim 8, wherein said escapement member is mounted centrally in said head (19) and about a post (46).

10. The apparatus of Claim 1, wherein said head (19) includes a curved recess (55) through which said cutting line extends between said spool means (41) and said escapement member (56).

**Revendications**

1. Appareil (11) de coupe de végétation, comprenant:

une tête (10) destinée à tourner autour d'un axe de rotation, la tête ayant au moins une ouverture périphérique (28) et une cavité (38) formant un espace de stockage d'une réserve (39) d'une ligne enroulée (21) de coupe disposée sur une bobine rotative (41) placée dans la cavité, la ligne de coupe étant souple et non métallique et ayant une extrémité libre dépassant de la tête par ladite ouverture, dans un plan de coupe, et

un organe (56) à échappement comprenant un dispositif (58, 59) destiné à coopérer avec la bobine afin qu'il assure la coopération avec verrouillage de la bobine et de l'organe d'échappement dans une première position de cet organe d'échappement afin que la ligne de coupe soit fixée et dépasse par l'ouverture dans le plan de coupe lorsque l'extrémité libre a un longueur prédéterminée, l'organe d'échappemnt étant monté sur la tête afin qu'il puisse se déplacer entre la première position et une seconde position d'avance pas à pas de la ligne de coupe dans l'ouverture dans le plan de coupe, l'organe d'échappement étant mobile de la première position vers la seconde pendant la rotation de la tête chaque fois que la ligne de coupe est raccourcie à une longueur inférieure à une valeur maximale prédéterminée, si bien que la ligne de coupe est avancée pendant la coupe de végétation, et un dispositif étant destiné à ramener l'organe d'échappement (56) de la première position à la seconde, l'organe d'échappement étant caractérisé en ce qu'il comprend une partie (64) coopérant avec la ligne de coupe (21) le long d'une partie de cette ligne de coupe placée entre la bobine et l'extrémité libre de la ligne de coupe afin que l'organe d'échappement soit repoussé vers la première position sous l'action d'une force appliquée à l'organe d'échappement et provoquée par la tendance de la ligne de coupe à avancer dans l'ouverture, dans le plan de coupe, pendant la coupe de la végétation, et caractérisé en outre en ce que le dispositif tendant à ramener l'organe d'échappement comporte une masse d'équilibrage placée sur l'organe d'échappement et destinée à assurer le déplacement de l'organe d'échappement à la suite d'une réduction de la force centrifuge appliquée à la ligne de coupe afin que l'organe d'échappement soit déplacé vers la seconde position.

2. Appareil selon la revendication 1, dans lequel l'organe d'échappement a une forme de coin muni d'un pivot (57) à son sommet (45) et d'une gorge courbe (64) placée dans sa partie élargie (50) afin qu'il coopère avec une partie de la ligne de coupe disposée entre la bobine et ladite ouverture (28) et détecte les variations de la force centrifuge appliquée à l'extrémité libre de la ligne de coupe (21) et reflétant la vitesse angulaire de la tête (19) pendant la rotation.

3. Appareil selon la revendication 2, dans lequel la ligne de coupe (21) agit sur l'organe d'échappement (56) par déplacement angulaire de celui-ci vers la seconde position lorsque la ligne de coupe est raccourcie à une longueur inférieure à la valeur prédéterminée.

4. Appareil selon la revendication 1, dans lequel l'organe d'échappement (56) agit avec un effet d'enclenchement pendant l'accélération de la tête (19) afin que l'organe d'échappement soit déplacé positivement dans la seconde position.

5. Appareil selon la revendication 4, dans lequel l'organe d'échappement (56) agit avec un effet d'enclenchement pendant la décélération de la tête (19) afin que l'organe d'échappement soit déplacé positivement dans la première position lorsque la ligne de coupe (21) est avancée jusqu'à la longueur maximale prédéterminée.

6. Appareil selon la revendication 1, dans lequel l'organe d'échappement (56) est monté sur un pivot (58) placé sur la tête (19) afin qu'il se déplace autour d'un axe décentré par rapport à l'axe de rotation de la tête (19) si bien que l'organe d'échappement se déplace angulairement de la première position à la seconde lorsque la tête accélère entre un état d'absence de rotation et un état de fonctionnement pendant lequel la végétation est coupée.

7. Appareil selon la revendication 6, dans lequel l'organe d'échappement (56) comporte des axes opposés (58, 59) d'ancrage placés de part et d'autre du pivot (58), et le déplacement de l'organe d'échappement entre la première et la seconde position déplace les axes d'ancrage en direction radiale entre des positions interne et externe, et la bobine (41) porte plusieurs dents d'échappement (71—74, 76—78) décalées angulairement, ces dents étant destinées à coopérer sélectivement avec les axes d'ancrage afin que la bobine ne puisse pas tourner lorsque l'organe d'échappement est dans la première position et que la rotation de la bobine soit commandée par la coopération progressive des dents avec les axes d'ancrage lorsque l'organe d'échappement se déplace entre la première et la seconde position.

8. Appareil selon la revendication 7, dans lequel les dents d'échappement (71—74, 76—78) sont placées sur la bobine à des positions radiales également espacées, une dent étant libérée de l'un des axes d'ancrage dans sa position interne et une autre dent étant au contact de l'autre des axes d'ancrage dans sa position externe.

9. Appareil selon la revendication 8, dans lequel l'organe d'échappement est monté au centre dans la tête (19) et autour d'un montant (46).

10. Appareil selon la revendication 1, dans lequel la tête (19) a une cavité courbe (55) dans laquelle est disposée la ligne de coupe entre la bobine (41) et l'organe d'échappement (56).

**Patentansprüche**

1. Vorrichtung (11) zum Schneiden von Pflanzen mit einem Kopf (19), der um eine Rotationsachse drehbar ist und der zumindest eine Umfangsöffnung (28) und einen Hohlraum (38) aufweist, der einen Lagerbereich für einen Vorrat (39) eines aufgewickelten Schneidbandes (21) vorsieht, welches auf einer drehbaren Spule (41) in diesem Hohlraum angeordnet ist, wobei das Schneidband flexibel und nicht metallisch ist mit einem freien Ende, welches sich durch diese Öffnung hindurch aus dem Kopf heraus in eine Schneidebene erstreckt, und

einem Hemmungsglied (56), welches Einrichtungen (58, 59) aufweist, die mit der Spule betätigbar sind, um eine arretierende Verbindung der Spule mit dem Hemmungsglied in einer ersten Stellung des Hemmungsgliedes derart zu ermöglichen, daß das Schneidband gegen eine Ausdehnung in die Schneidebene hinein durch diese Öffnung gesichert ist, wenn dieses freie Ende eine vorbestimmte Länge aufweist, wobei das Hemmungsglied auf dem Kopf für eine Bewegung zwischen dieser ersten Stellung und einer zweiten Stellung zur schrittweisen Ausdehnung des Schneidbandes durch diese Öffnung in die Schneidebene hinein befestigt ist, wobei das Hemmungsglied während der Kopfdrehung aus der ersten Stellung in diese zweite Stellung immer dann bewegbar ist, wenn das Schneidband auf weniger als die vorbestimmte maximale Länge gekürzt ist, wodurch das Schneidband während des Pflanzenschneidens längenmäßig ausgedehnt wird, und eine Vorrichtung, die so vorgesehen ist, daß sie die Rückkehr des Hemmungsgliedes (56) aus der ersten Stellung in die zweite Stellung zu veranlassen sucht, und wobei das Hemmungsglied dadurch gekennzeichnet ist, daß das Hemmungsglied (56) einen Bereich (64) aufweist, der mit dem Schneidband (21) entlang einem Bereich dieses Schneidbandes zwischen der Spule und dessen freiem Ende in Eingriff steht, um das Hemmungsglied aufgrund einer Kraft, die auf das Hemmungsglied ausgeübt wird und durch das Schneidband bewirkt wird, welches während des Pflanzenschneidens dazu neigt, sich durch diese Öffnung in die Schneidebene hinein zu erstrecken, in diese erste Stellung zu zwingen, und das weiterhin durch die Vorrichtung gekennzeichnet ist, die die Rückkehr des Hemmungsgliedes zu veranlassen sucht und die eine Gegengewichtmasse mit Wirkung auf das Hemmungsglied aufweist, um eine Bewegung des Hemmungsglieds infolge einer Abnahme der Zentrifugalkraft auf das Schneidband derart zu bewirken, daß das Hemmungsglied in diese zweite Stellung geschoben wird.

2. Vorrichtung nach Anspruch 1, in welcher das Hemmungsglied keilförmig ausgebildet ist mit einer Drehgelenkvorrichtung (57) in seinem spitzen Scheitelbereich (45) und einer gebogenen Rille (64) in seinem erweiterten Bereich (50) zur eingreifenden Verbindung mit einem Bereich des Schneidbandes, der sich von der Spule zu dieser Öffnung (28) erstreckt, um Änderungen der auf das freie Ende des Schneidbandes (21) ausgeübten Zentrifugalkraft abzufühlen, die die Winkelgeschwindigkeit des Kopfes (19) während der Drehung reflektieren.

3. Vorrichtung nach Anspruch 2, dadurch gekennzeichnet, daß das Schneidband (21) derart auf das Hemmungsglied (56) wirkt, daß letzteres bezüglich seiner Winkellage in die zweite Stellung verschoben wird, in welcher das Schneidband auf eine Länge gekürzt ist, die kleiner als die vorbestimmte Länge ist.

4. Vorrichtung nach Anspruch 1, in welcher das Hemmungsglied (56) während der Beschleunigung des Kopfes (19) zur zuverlässigen Verschiebung des Hemmungsglieds in dessen zweite Stellung mit einer Einrastwirkung arbeitet.

5. Vorrichtung nach Anspruch 4, in welcher das Hemmungsglied (56) während der Abbremsung des Kopfes (19) zur zuverlässigen Verschiebung des Hemmungsgliedes in dessen erste Stellung, wenn das Schneidband (21) auf die vorbestimmte maximale Länge ausgedehnt ist, mit einer Einrastwirkung arbeitet.

6. Vorrichtung nach Anspruch 1, in welcher das Hemmungsglied (56) auf dem Kopfteil (19) zur Bewegung um eine Achse, die bezüglich der Rotationsachse des Kopfes (19) dezentriert ist, auf Drehgelenkeinrichtungen (58) befestigt ist, wodurch sich das Hemmungsglied durch Winkellageverschiebung aus seiner ersten Stellung in seine zweite Stellung bewegt, wenn die Rotation des Kopfes zwischen dem Zustand der Nichtrotation und der Betätigung beim Pflanzenschneiden beschleunigt wird.

7. Vorrichtung nach Anspruch 6, in welcher das Hemmungsglied (56) gegenüberliegende Ankerstifte (58, 59) aufweist, die auf jeder Seite der Drehgelenkeinrichtungen (58) vorgesehen sind, und in welcher die Bewegung des Hemmungsglieds zwischen der ersten und der zweiten Stellung die Ankerstifte radial zwischen inneren und äußeren Stellungen bewegt, und in welcher die Spule (41) mehrer winkelmäßig verteilt angeordnete Hemmzähne (71 bis 74, 76 bis 78) trägt, die so betätigbar sind, daß sie selektiv in Eingriff mit diesen Ankerstiften geraten, um die Spule in der ersten Stellung gegen Rotation mit dem Hemmungsglied abzusichern und um die Drehung der Spule zu steuern, indem die Zähne mit den Ankerstiften schrittweise in Eingriff geraten, wenn sich das Hemmungsglied zwischen der ersten Stellung und der zweiten Stellung bewegt.

8. Vorrichtung nach Anspruch 7, in welcher die Hemmzähne (71 bis 74, 76 bis 78) auf der Spule an radial gleich beabstandeten Positionen angeordnet sind, wobei ein Zahn mit einem der Ankerstifte an dessen innerer Stellung außer Eingriff ist und ein anderer der Zähne mit dem anderen der Ankerstifte an dessen äußerer Stellung in Eingriff ist.

9. Vorrichtung nach Anspruch 8, in welcher das Hemmungsglied in dem Kopf (19) zentral und über einem Tragpfeiler (46) befestigt ist.

10. Vorrichtung nach Anspruch 1, in welcher der Kopf (19) eine kurvenförmige Vertiefung (55) aufweist, durch welche das Schneidband sich zwischen der Spulenvorrichtung (41) und dem Hemmungsglied (56) erstreckt.

Fig. 1

Fig. 3

*Fig. 2*

*Fig. 8*

0 053 129

Fig. 4

Fig. 5

3

Fig. 6

Fig. 7